# EUROPEAN PATENT SPECIFICATION

(11) **EP 3 674 146 B1**
(45) Date of publication and mention of the grant of the patent: **30.03.2022**
(21) Application number: 19210612.8
(22) Date of filing: 21.11.2019
(51) Int. Cl.: B60R 16/027, H02G 3/04, B60R 16/02

(54) **EXTERIOR MEMBER AND WIRE HARNESS**
AUSSENELEMENT UND KABELBAUM
ÉLÉMENT EXTÉRIEUR ET FAISCEAU DE CÂBLES

(30) Priority: 25.12.2018 JP 2018240579
(43) Date of publication of application: 01.07.2020
(73) Proprietor: YAZAKI CORPORATION, Minato-ku, Tokyo 108-8333 (JP)
(72) Inventor: YANAZAWA, Kenta, Makinohara-shi, Shizuoka 421-0407 (JP); ADACHI, Hideomi, Makinohara-shi, Shizuoka 421-0407 (JP); OGUE, Takeshi, Makinohara-shi, Shizuoka 421-0407 (JP); TSURU, Masahide, Makinohara-shi, Shizuoka 421-0407 (JP); YOSHIDA, Hiroyuki, Makinohara-shi, Shizuoka 421-0407 (JP); NAGASHIMA, Toshihiro, Makinohara-shi, Shizuoka 421-0407 (JP)
(74) Representative: Grünecker Patent- und Rechtsanwälte PartG mbB

(56) References cited:
- EP-A1- 2 894 741
- WO-A1-2014/080912
- JP-A- 2010 051 042
- US-A1- 2009 178 340
- US-A1- 2014 076 628
- US-B2- 6 682 353

## Description

### BACKGROUND OF THE INVENTION

### <Field of the Invention>

The present invention relates to wire harness routed in an automobile that accommodates and protects one or a plurality of conductive paths.

### <Description of Related Art>

For example, a wire harness routed in an electric automobile or a hybrid automobile includes one or a plurality of conductive paths and an exterior member having a tubular shape through which the conductive path is inserted. The wire harness is long. The wire harness disclosed in the following Patent Literature 1 has a plurality of corrugated tubes as an exterior member, and adjacent end portions of the corrugated tubes are connected by a protector. In the exterior member of the wire harness, a portion with the corrugated tube is used as a bendable portion, and a portion with a protector is used as a portion where path regulation is performed.

[Patent Literature 1] JP-A-2010-51042

US6682353 discloses a wire harness comprising alternating flexible and straight sections.

In a related art, since a protector is required for each portion requiring a path regulation, and a corrugated tube is also required in accordance with a number of protectors, there are problems that a number of components is larger and component management is complicated, and cost is increased.

### SUMMARY

One or more embodiments provide a wire harness that can reduce a number of components and facilitate component management, and can also reduce a cost.

The invention relates to a wire harness routed in an automobile and comprising an exterior member for accommodating and protecting one or a plurality of conductive paths,wherein the exterior member comprises:a first exterior member; and a protector configured to regulate a desired path,wherein the first exterior member includes a bendable, flexible tube portion and a straight, non-flexible tube portion,wherein the bendable, flexible tube portion is a portion which is made of a resin and through which one or a plurality of conductive paths are inserted, and has a flexibility that allows the one or plurality of conductive paths to be bendable and routed,wherein the one or plurality of conductive paths are routed straight in the straight,non-flexible tube portion,wherein the bendable, flexible tube portion and the straight, non-flexible tube portion are alternately and continuously arranged in a tube axis direction,wherein the protector is configured to maintain the flexible tube portion in a desired bendable shape by mounting the protector to the flexible tube portion,wherein the protector has a protector main body in which the bendable, flexible tube portion is directly surrounded from the outside, and wherein the protector main body is formed in a length so as to expose an end portion of the bendable, flexible tube portion in order to allow some bending.

According to the aspect (1), since the first exterior member including the flexible tube portion and the straight tube portion and the protector mounted to at least one of the plurality of flexible tube portions are provided, a path can be regulated in a straight state by the straight tube portion, and the path can be regulated in a desired bent shape by the flexible tube portion to which the protector is mounted, for example. According to the present invention, since the flexible tube portion and the straight tube portion are alternately and continuously formed in the tube axis direction (that is, integrally formed), the number of components can be reduced as compared with a conventional example. In addition, since the straight tube portion has a function of a conventional protector, the number of components can be reduced similarly. Therefore, component management can be facilitated and cost can also be reduced.

In an aspect (2), a first terminal flexible tube portion is arranged at a terminal of the first exterior member. A second protector for connection is attached to the first terminal flexible tube portion. A second terminal flexible tube portion of a second exterior member is connected to the second protector.

According to the aspect (2), since the exterior member further includes the second protector and the second exterior member connected to the second protector, it is possible to cope with a case where the wire harness is longer. According to the present invention, since a configuration of the aspect (1) is capable of reducing the number of components, it is possible to provide the exterior member having a small number of components even when the wire harness of the aspect (2) has a longer length. Incidentally, as the second exterior member, a corrugated tube made of a bellows tube can be exemplified.

According to one or more embodiments, it is possible to reduce the number of components, thereby achieving an effect that the component management can be facilitated and the cost can be reduced.

### BRIEF DESCRIPTION OF THE DRAWING

Figs. 1A and 1B are views showing a wire harness according to an embodiment. Fig. 1A is a schematic view showing a routing state of a high voltage wire harness. Fig. 1B is a schematic view showing a routing state of a low voltage wire harness different from Fig. 1A (first embodiment).
Fig. 2 is a schematic view showing a routing state and a configuration of a wire harness.
Figs. 3A and 3B are views showing an exterior member and a conductive path of Fig. 2. Fig. 3A is a configuration view of a first exterior member that is an exterior member. Fig. 3B is a schematic view showing a state in which the conductive path is inserted into an inner side of the first exterior member.
Fig. 4 is a schematic view showing a state in which a flexible tube portion is bent in accordance with path routing.
Fig. 5 is a schematic view of the wire harness in a state in which a protector is mounted to the flexible tube portion.
Fig. 6 is a schematic view showing a routing state and a configuration of a wire harness of another example (second embodiment).
Figs. 7A and 7B are views showing an exterior member and a conductive path of Fig. 6. Fig. 7A is a configuration view of a first exterior member and a second exterior member that are an exterior member. Fig. 7B is a schematic view showing a state in which the conductive path is inserted into inner sides of the first exterior member and the second exterior member.
Fig. 8 is a schematic view showing a state in which a flexible tube portion is bent in accordance with path routing.
Fig. 9 is a schematic view of the wire harness in a state in which a protector and a second protector are mounted to the flexible tube portion.

### DETAILED DESCRIPTION

A wire harness includes an exterior member made of a resin and one or a plurality of conductive paths inserted into an inner side of the exterior member. The exterior member includes a first exterior member and a protector. The first exterior member includes a flexible tube portion having a flexibility capable of bending and routing the conductive path, and a straight tube portion for routing the conductive path straight. The first exterior member is formed into a shape that the flexible tube portion and the straight tube portion are alternately continued in a tube axis direction. The protector is mounted to at least one of the plurality of flexible tube portions and is provided to regulate the flexible tube portion in a desired path. In addition, the exterior member includes a second protector for connection and a second exterior member different from the first exterior member in order to make the exterior member longer.

### <First Embodiment>

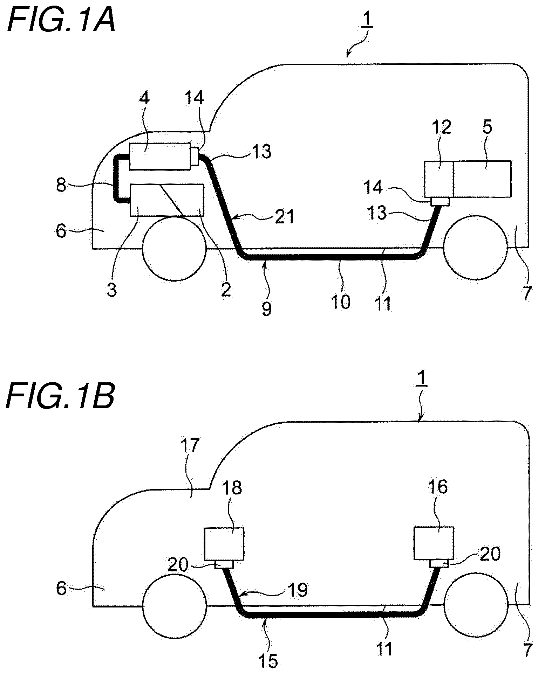

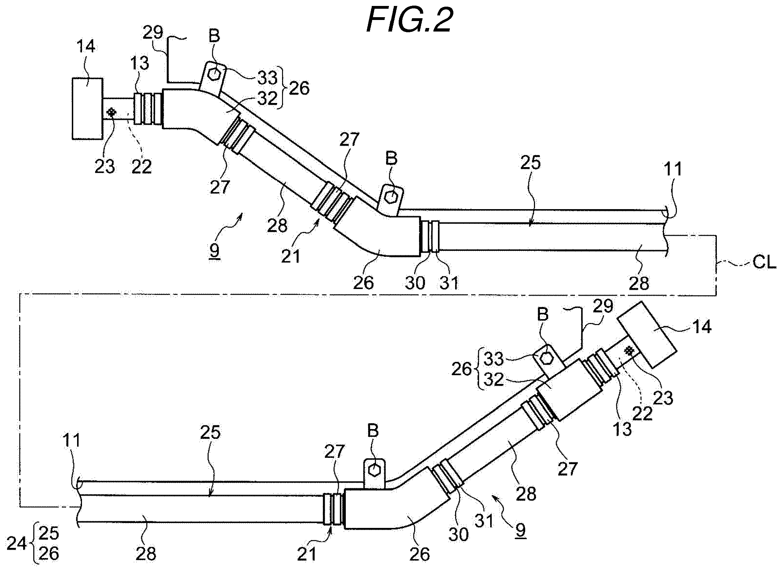

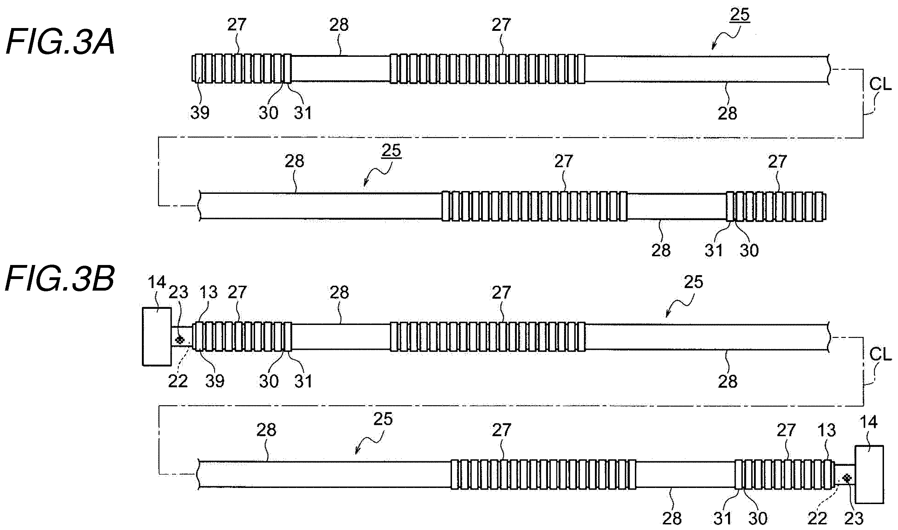

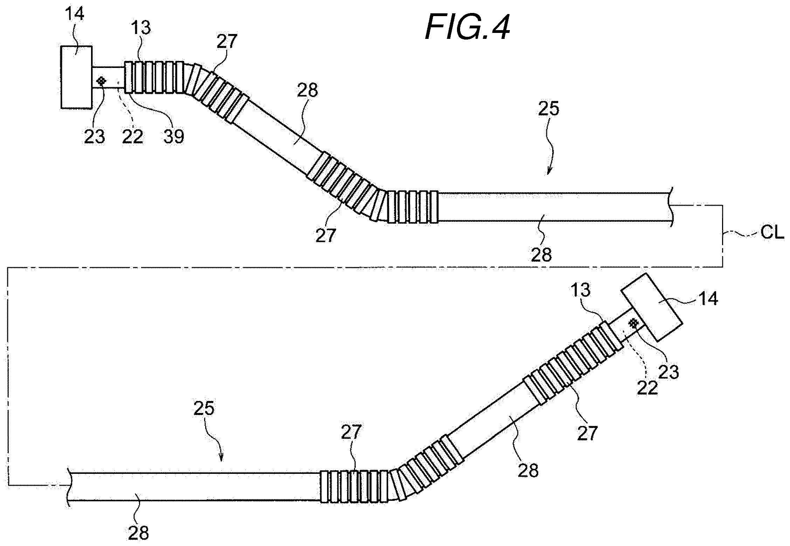

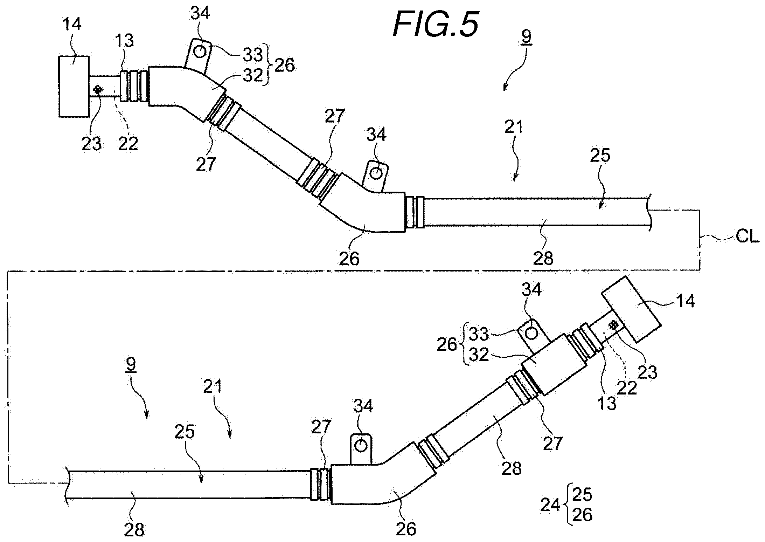

A first embodiment will be described below with reference to the drawings. Figs. 1A and 1B are views showing a wire harness according to an embodiment of the present invention. Fig. 1A is a schematic view showing a routing state of a high voltage wire harness. Fig. 1B is a schematic view showing a routing state of a low voltage wire harness different from Fig. 1A. Fig. 2 is a schematic view showing a routing state and a configuration of a wire harness. Figs. 3A and 3B are views showing an exterior member and a conductive path of Fig. 2. Fig. 3A is a configuration view of a first exterior member that is an exterior member. Fig. 3B is a schematic view showing a state in which the conductive path is inserted into an inner side of the first exterior member. Fig. 4 is a schematic view showing a state in which a flexible tube portion is bent in accordance with path routing. In addition, Fig. 5 is a schematic view of the wire harness in a state in which a protector is mounted to the flexible tube portion.

In the present embodiment, the present invention is applied to a wire harness routed in a hybrid automobile. Incidentally, the present invention is not limited to the hybrid automobile, and may be applied to an automobile such as a PHV or an electric vehicle using a motor as a drive source, or a general automobile traveling only by an engine. In addition, the engine may be used only for power generation. Besides, the present invention may be applied to a fuel cell automobile or an automatic driving vehicle.

### <Configuration of Hybrid Automobile 1>

In Fig. 1A, a reference numeral 1 indicates a hybrid automobile. The hybrid automobile 1 is a vehicle that is driven by mixing two power of an engine 2 and a motor unit 3, and electric power from a battery 5 (battery pack) is supplied to the motor unit 3 via an inverter unit 4. In the present embodiment, the engine 2, the motor unit 3, and the inverter unit 4 are mounted in an engine compartment 6 at a position where front wheels or the like are positioned. In addition, the battery 5 is mounted on an automobile rear portion 7 where rear wheels or the like are provided (may be mounted at a position in an automobile compartment existing behind the engine compartment 6).

The motor unit 3 and the inverter unit 4 are connected by a high voltage wire harness 8 (high voltage motor cable) . In addition, the battery 5 and the inverter unit 4 are also connected by a high voltage wire harness 9. An intermediate portion 10 of the wire harness 9 is routed under a vehicle floor 11 of the vehicle (in a vehicle body) . In addition, the intermediate portion 10 is routed substantially in parallel along the vehicle floor 11. The vehicle floor 11 is a known body (vehicle body) and is a so-called panel member, and a through hole is formed at a predetermined position thereof. The wire harness 9 is inserted into the through hole in a watertight manner.

The wire harness 9 and the battery 5 are connected to each other via a junction block 12 provided on the battery 5. The junction block 12 is electrically connected to an external connection means such as a shield connector 14 disposed at a harness terminal 13 on the rear end side of the wire harness 9. In addition, the wire harness 9 and the inverter unit 4 are electrically connected to each other via an external connection means such as the shield connector 14 disposed on the harness terminal 13 on a front end side.

The motor unit 3 includes a motor and a generator. In addition, the inverter unit 4 includes an inverter and a converter. The motor unit 3 is formed as a motor assembly including a shield case. In addition, the inverter unit 4 is also formed as an inverter assembly including a shield case. The battery 5 is a Ni-MH type battery or a Li-ion type battery, and is formed as a module. Incidentally, a power storage device such as a capacitor may be used, for example. It is needless to say that the battery 5 is not particularly limited as long as it is for a high voltage that can be used for the hybrid automobile 1, an electric automobile, or the like.

In Fig. 1B, a reference numeral 15 indicates a wire harness. The wire harness 15 is a low voltage (for low voltage) wire harness, and is provided to electrically connect a low voltage battery 16 on the automobile rear portion 7 in the hybrid automobile 1 and an auxiliary device 18 (equipment) mounted on an automobile front portion 17. Like the wire harness 9 of Fig. 1A, the wire harness 15 is routed through the vehicle floor 11 (as an example, may be routed through a vehicle interior side). A reference numeral 19 in the wire harness 15 indicates a harness main body. In addition, a reference numeral 20 indicates a connector.

As shown in Figs. 1A and 1B, the high voltage wire harnesses 8, 9 and the low voltage wire harness 15 are routed in the hybrid automobile 1. The present invention can be applied to any one of the wire harnesses, but the high voltage wire harness 9 will be described below as a representative example. First, a configuration and a structure of the wire harness 9 will be described.

### <Configuration of Wire Harness 9>

In Figs. 1A and 2, the long wire harness 9 routed through the vehicle floor 11 includes a harness main body 21 and the shield connectors 14 (external connection means) respectively disposed at both terminals (harness terminals 13) of the harness main body 21. In addition, the wire harness 9 includes a water stop member (for example, a grommet or the like) (not shown).

### <Configuration of Harness Main Body 21>

In Fig. 2, the harness main body 21 includes two long conductive paths 22, a shield member 23 that collectively covers the conductive paths 22, and an exterior member 24 for accommodating and protecting the two conductive paths 22 covered with the shield member 23. In the first embodiment, the exterior member 24 is a characteristic portion. Specifically, a first exterior member 25 and a plurality of protectors 26 configuring the exterior member 24 are characteristic portions.

### <Conductive Path 22>

In Fig. 2, the conductive path 22 includes a conductive conductor (not shown) and an insulating insulator (not shown) covering the conductor. In the present embodiment, the conductive path 22 is not provided with a sheath (assumed as an example). Since the conductive path 22 is not provided with the sheath, the conductive path 22 is lighter (since the conductive path 22 is long, the conductive path 22 can be significantly reduced in weight as compared with a case having a sheath). Incidentally, the number of the conductive paths 22 is an example.

The conductor is formed into a circular cross section by a copper, a copper alloy, or an aluminum or an aluminum alloy. The conductor may be either a conductor structure formed by twisting a wire or a rod-shaped conductor structure having a circular cross section (round shape) (for example, a round single-core conductor structure, in this case, the conductive path itself is also rod-shaped) . The insulator made of an insulating resin material is extruded on an outer surface of the conductor as described above.

The insulator is extruded on an outer peripheral surface of the conductor using a thermoplastic resin material. The insulator is formed as a coating having a circular cross section. The insulator is formed to have a predetermined thickness. As the thermoplastic resin, various known types can be used, and for example, the thermoplastic resin is appropriately selected from a polymer material such as a polyvinyl chloride resin, a polyethylene resin, or a polypropylene resin.

### <Shield Member 23>

In Fig. 2, the shield member 23 collectively covers the two conductive paths 22, and in the present embodiment, a braid is used thereto (assumed as one example, the shield member 23 may be a metal foil, a sheet stepping on a metal foil, or the like) . The shield member 23 is provided to exhibit a shielding function. The braid (shield member 23) is formed into a tubular shape by knitting an ultrafine wire having a conductivity. In addition, the braid is formed into a shape and a size so as to cover the entire outer peripheral surface from one end of the insulator to the other end thereof. Incidentally, the shield member 23 may cover the two conductive paths 22 one by one.

### <Exterior Member 24>

In Fig. 2, the exterior member 24 includes the first exterior member 25 and the plurality of protectors 26. In the present embodiment, the exterior member 24 is provided with only one first exterior member 25. That is, it is not necessary to provide a plurality of first exterior members 25 in accordance with the number of the plurality of protectors 26 (in a conventional example, the number of protectors plus one is the number of corrugated tubes). The number of components of the exterior member 24 can be reduced as compared with the conventional example.

### <First Exterior Member 25>

In Figs. 2 and 3A, the first exterior member 25 is a tubular body through which the conductive path 22 is inserted, and is formed to have a length necessary for accommodating the conductive path 22 and a thickness necessary for protection. In the present embodiment, the first exterior member 25 is formed in a circular cross-sectional shape (the cross-sectional shape is an example, it may have an elliptical shape, an oval shape, or a rectangular shape) . The first exterior member 25 includes a plurality of flexible tube portions 27 having a flexibility and a plurality of straight tube portions 28 without the flexibility as the flexible tube portion 27.

### <Flexible Tube Portion 27 and Straight Tube Portion 28>

In Figs. 2 and 3A, the flexible tube portion 27 and the straight tube portion 28 are integrally resin-molded so as to have a linear shape as a whole in a state where the flexible tube portion 27 is not bent. The flexible tube portion 27 and the straight tube portion 28 are formed in an illustrated shape so as to be alternately continued in a tube axis CL direction.

The flexible tube portion 27 and the straight tube portion 28 are arranged and formed at positions matched with a shape of a vehicle attachment object 29. In addition, the flexible tube portion 27 and the straight tube portion 28 are formed to have a length matched with the shape of the vehicle attachment object 29. It is needless to say that by changing a length of the flexible tube portion 27 in the tube axis CL direction, the flexible tube portion 27 can be bent to a required length in accordance with the shape of the vehicle attachment object 29. The flexible tube portion 27 can be bent at a desired angle when the wire harness is transported and is routed in a path in the vehicle, that are will be described later. Incidentally, the flexible tube portion 27 can be deflected into a bent shape before the protector 26 to be described later is mounted, and can be naturally returned to an original straight shape.

The flexible tube portion 27 is formed into a bellows tube shape in the present embodiment (the shape is not particularly limited as long as it has the flexibility). Specifically, the flexible tube portion 27 includes bellows concave portions 30 and bellows convex portions 31 in a circumferential direction, and is formed into a shape that the bellows concave portions 30 and the bellows convex portions 31 are alternately continued in the tube axis CL direction.

The plurality of flexible tube portions 27 are formed so as to be able to bend when the wire harness is routed in a path and/or is transported. Incidentally, the flexible tube portion 27 can be arranged and formed even in a portion that does not need to bend.

The first exterior member 25 is formed in such a shape in which an arrangement portion of the flexible tube portion 27 is a corrugated tube. In other words, the first exterior member 25 is partially formed in the shape of a corrugated tube. Since the first exterior member 25 has the corrugated tube portion as described above, the first exterior member 25 can be referred to as a "partially formed corrugated tube".

The first exterior member 25 is formed into a shape in which a slit is not provided along the tube axis CL direction (without splitting an abdomen). The reason why the slit is not provided is that infiltration of moisture into the first exterior member 25 is prevented to improve waterproofness. In addition, for example, the conductive path 22 (shield member 23) does not protrude in the bent portion. Further, it is also possible to increase a rigidity of the first exterior member 25 itself.

The straight tube portion 28 is formed as a portion that restricts deflection (a portion that restricts bending). Incidentally, in the case where a clamp that is a post-attaching component is required, the straight tube portion 28 is also formed as a portion to which the clamp is attached. In addition, since the straight tube portion 28 has a straight tube shape as shown in the drawing, the straight tube portion 28 can be referred to as a "straight tube portion". Further, since the straight tube portion 28 is not bent, it can be also referred to as a "non-flexible tube portion". In the present embodiment, the straight tube portion 28 is formed into a shape having a circular cross section (not limited to a circular cross section, but may have an elliptical shape or an oval shape). The straight tube portion 28 is formed in a more rigid portion than the flexible tube portion 27. The straight tube portion 28 is also formed to have a length in accordance with the shape of the vehicle attachment object 29 or a length in accordance with the vehicle floor 11. As can be seen from the above, the straight tube portion 28 is effective as a portion in which the conductive path 22 is routed straight.

### <Protector 26>

In Figs. 2 and 5, the protector 26 is provided to regulate the flexible tube portion 27 in a desired path. In other words, the protector 26 is provided such that the flexible tube portion 27 can be maintained in a desired bent shape by mounting the protector 26 to the flexible tube portion 27. The plurality of types of the protectors 26 are prepared in accordance with the length and the bent shape of the flexible tube portion 27 (for the sake of simplification, all are given the same reference numerals). The protector 26 is a resin molded product, and includes a protector main body 32 having a spit-in-half structure in which the flexible tube portion 27 is sandwiched, and a fixing portion 33 connected with the protector main body 32.

Since the protector main body 32 has the spit-in-half structure as described above, the protector main body 32 has a hinge or a lock structure (not shown). The protector main body 32 is formed in a portion having a structure in which the flexible tube portion 27 is directly surrounded from the outside (in the present embodiment, the protector main body 32 is formed in a length so as to expose an end portion of the flexible tube portion 27 in order to allow some bending).

The fixing portion 33 is a portion for fixing to the vehicle attachment object 29 (vehicle floor 11), and an insertion hole 34 for a bolt B, for example, is formed to penetrate therethrough (not particularly shown, but a metal collar is insert-molded, and a through hole of the collar corresponds to the insertion hole 34). Incidentally, an arrangement and the number of the fixing portions 33 are examples.

The protector 26 is mounted to all the flexible tube portions 27 in the present embodiment, but is assumed to be mounted to at least one flexible tube portion 27. It is needless to say that the protector 26 is particularly effective in maintaining a complicated bent shape.

### <Shield Connector 14>

In Fig. 2, the shield connectors 14 are provided as the external connection means provided at both terminals of the wire harness 9. As the shield connector 14, a known shield connector is used. The conductive path 22 and the shield member 23 are electrically connected to the shield connector 14 as described above.

### <Manufacturing to Path Routing of Wire Harness 9>

In the above configuration and structure, the wire harness 9 is manufactured as follows (a description herein is an example) . That is, as shown in Figs. 3A and 3B, the wire harness 9 is manufactured by inserting the two conductive paths 22 covered with the shield member 23 from one end opening to the other end opening of the first exterior member 25. In addition, the wire harness 9 is manufactured by attaching a grommet, a boot, or the like (not shown) to a predetermined position on an outer surface of the first exterior member 25. Further, the wire harness 9 is manufactured by providing the shield connectors 14 at terminal portions of the conductive path 22 and the shield member 23.

After being manufactured as described above, the bending is performed by folding the flexible tube portion 27 at a predetermined position, and the packing is completed (stored in a box) by maintaining the bent state. Since the flexible tube portion 27 is bent, and a packing state becomes compact, and the wire harness 9 is transported to the vehicle assembly site while remaining in the compact packing state.

At the vehicle assembly site, the wire harness 9 is taken out from the box, and the flexible tube portion 27 is formed into the desired bent shape as shown in Fig. 4. Further, when the protector 26 is mounted to the flexible tube portion 27 as shown in Fig. 5 in order to maintain the desired bent shape, the manufacturing of the wire harness 9 is completed. After the wire harness 9 is manufactured, as shown in Fig. 2, the wire harness 9 is attached to the vehicle from a long straight tube portion 28 corresponding to the vehicle floor 11. The long straight tube portion 28 is fixed by the protector 26 in the vicinity thereof. Further, after the fixing, the remaining protector 26 is also fixed to a predetermined position on the vehicle attachment object 29. Thus, a series of operations related to the path routing of the wire harness 9 is completed. The wire harness 9 is routed in a desired path as shown in Fig. 2.

### <Effects of Exterior Member 24 and Wire Harness 9>

As described above with reference to Figs. 1A to 5, in the exterior member 24 and the wire harness 9 according to the first embodiment of the present invention, since the first exterior member 25 including the flexible tube portion 27 and the straight tube portion 28 and the protectors 26 mounted to the plurality of flexible tube portions 27 are provided, the path can be regulated in a straight state by the straight tube portion 28, and the path can be regulated in the desired bent shape by the flexible tube portion 27 to which the protector 26 is mounted. In addition, according to the exterior member 24 and the wire harness 9, since the flexible tube portion 27 and the straight tube portion 28 are alternately and continuously formed in the tube axis CL direction (that is, integrally formed), the number of components can be reduced as compared with the conventional example. Further, since the straight tube portion 28 has a function of a conventional protector, the number of components can be reduced similarly. Therefore, according to the exterior member 24 and the wire harness 9, component management can be facilitated and cost can be reduced.

### <Second Embodiment>

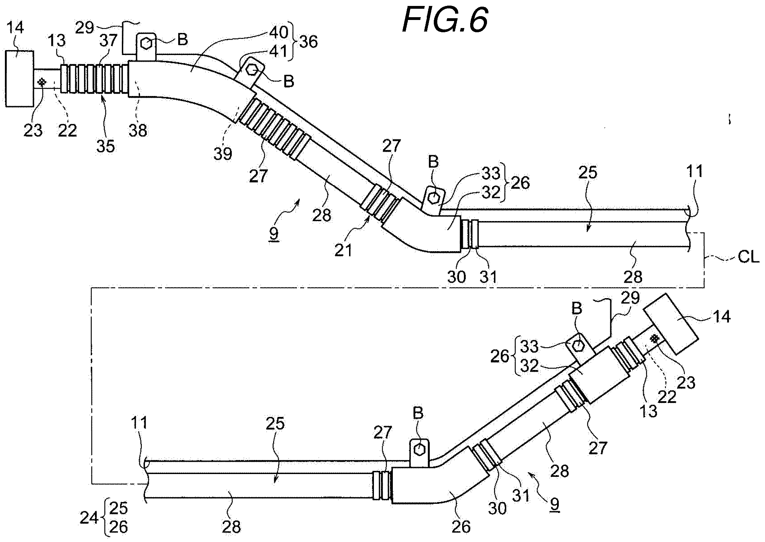

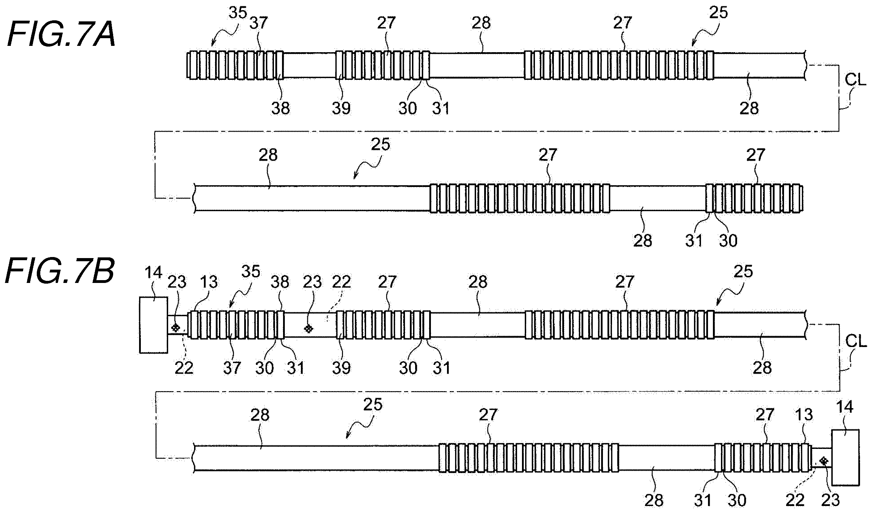

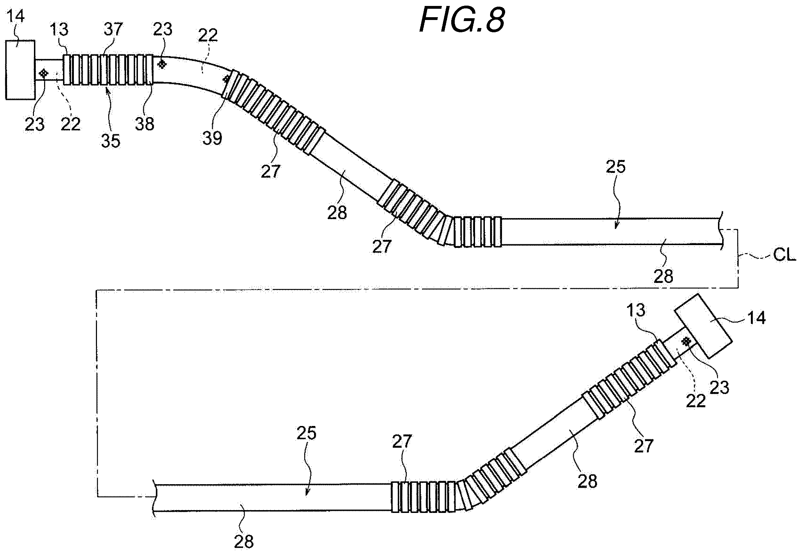

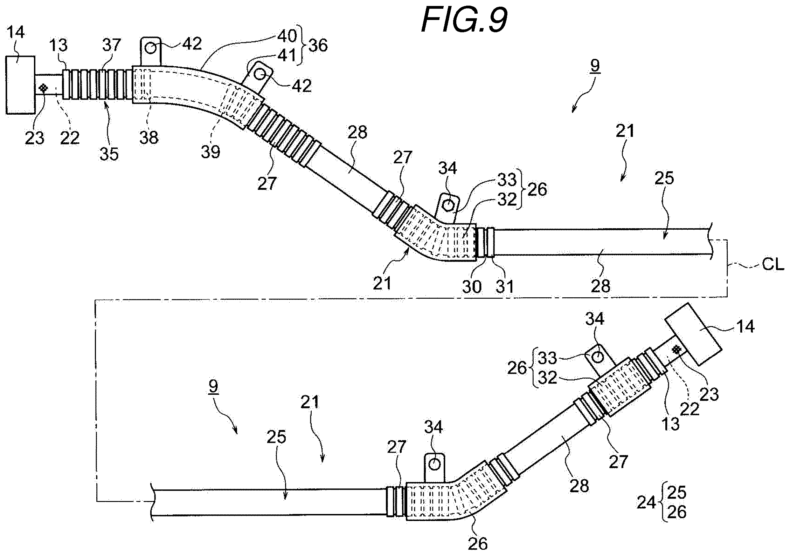

A second embodiment will be described below with reference to the drawings. Fig. 6 is a schematic view showing a routing state and a configuration of the wire harness of another example. Figs. 7A and 7B are views showing the exterior member and the conductive path of Fig. 6. Fig. 7A is a configuration view of the first exterior member and a second exterior member that are an exterior member. Fig. 7B is a schematic view showing a state in which the conductive path is inserted into inner sides of the first exterior member and the second exterior member. Fig. 8 is a schematic view showing a state in which the flexible tube portion is bent in accordance with the path routing. In addition, Fig. 9 is a schematic view of the wire harness in a state in which a protector and a second protector are mounted to the flexible tube portion. Incidentally, the same components as in the first embodiment are denoted by the same reference numerals, and a detailed description thereof is omitted.

### <Configurations of Wire Harness 9 and Harness Main Body 21 of Second Embodiment>

In Fig. 6, the long wire harness 9 routed through the vehicle floor 11 includes the harness main body 21 and the shield connectors 14 respectively disposed at the both terminals of the harness main body 21. In addition, the wire harness 9 includes the water stop member (for example, the grommet or the like) (not shown). The wire harness 9 of the second embodiment has a longer than that of the first embodiment (a left end side in the drawing is longer. Incidentally, a right side and both sides may be made longer).

### <Harness Main Body 21>

In Fig. 6, the harness main body 21 includes the two long conductive paths 22, the shield member 23 that collectively covers the conductive paths 22, and the exterior member 24 for accommodating and protecting the two conductive paths 22 covered with the shield member 23. In the second embodiment, the exterior member 24 is the characteristic portion. Specifically, as in the first embodiment, the first exterior member 25 and the plurality of protectors 26 configuring the exterior member 24 are the characteristic portions. In addition, a second exterior member 35 and a second protector 36 configuring the exterior member 24 also are characteristic portions. Hereinafter, the second exterior member 35 and the second protector 36 added in the second embodiment will be described.

### <Second Exterior Member 35>

In Figs. 6 and 7B, the second exterior member 35 is a tubular body made of a resin through which the conductive path 22 is inserted, and is formed to have a length by which a length of the wire harness 9 is longer than that of the first embodiment. In the present embodiment, the entire second exterior member 35 is formed as a flexible tube portion 37 having the same shape as the flexible tube portion 27 of the first exterior member 25. In other words, the entire second exterior member 35 is formed into a corrugated tube. Incidentally, a reference numeral 38 in the second exterior member 35 (flexible tube portion 37) indicates a terminal flexible tube portion.

### <Second Protector 36>

In Figs. 6 and 9, the second protector 36 is provided to connect a terminal flexible tube portion 39 of the flexible tube portion 27 in the first exterior member 25 and the terminal flexible tube portion 38 in the second exterior member 35 (flexible tube portion 37). The second protector 36 is formed such that a connecting portion can be maintained in a desired bent shape while connecting the terminal flexible tube portions 39, 38. The second protector 36 includes a protector main body 40 having a spit-in-half structure in which the terminal flexible tube portions 39, 38 are sandwiched at both ends thereof, and a fixing portion 41 connected to the protector main body 40.

Since the protector main body 40 has the spit-in-half structure as described above, the protector main body 40 has a hinge or a lock structure (not shown). The protector main body 40 is formed in a portion having a structure in which the conductive path 22 covered with the shield member 23 is directly surrounded from the outside while sandwiching the terminal flexible tube portions 39, 38, respectively (assumed as an example. The protector main body 40 may be formed in a portion having a structure in which the terminal flexible tube portions 39, 38 are arranged with substantially no gap therebetween) . The fixing portion 41 is a portion for fixing to the vehicle attachment object 29, and an insertion hole 42 for the bolt B is formed to penetrate therethrough.

### <Manufacturing to Path Routing of Wire Harness 9 of Second Embodiment>

In the above configuration and structure, the wire harness 9 of the second embodiment is manufactured as follows (a description herein is an example) . That is, as shown in Figs. 7A and 7B, the wire harness 9 is manufactured by inserting the two conductive paths 22 covered with the shield member 23 from the one end opening to the other end opening of the first exterior member 25 and also through the second exterior member 35. In addition, the wire harness 9 is manufactured by attaching the grommet, the boot, or the like (not shown) to the predetermined position on the outer surface of the first exterior member 25. Further, the wire harness 9 is manufactured by providing the shield connectors 14 at the terminal portions of the conductive path 22 and the shield member 23.

After being manufactured as described above, the bending is performed by folding the flexible tube portion 27 at the predetermined position, and the bent state is maintained. In addition, the two conductive paths 22 covered with the shield member 23 exposed between the first exterior member 25 and the second exterior member 35 are bent so as to be folded, and the bent state is maintained. As a result, the packing is completed (stored in the box). Since the flexible tube portion 27 and the exposed portion are bent, the packing state becomes compact, and the wire harness 9 is transported to the vehicle assembly site while remaining in the compact packing state.

At the vehicle assembly site, the wire harness 9 is taken out from the box, the flexible tube portion 27 and the exposed portion are formed into a desired bent shape as shown in Fig. 8. When the protector 26 and the second protector 36 are mounted to the flexible tube portion 27 and the exposed portion (the terminal flexible tube portions 39, 38) as shown in Fig. 9 in order to maintain the desired bent shape, the manufacture of the wire harness 9 is completed. After the wire harness 9 is manufactured, as shown in Fig. 6, the wire harness 9 is attached to the vehicle from the long straight tube portion 28 corresponding to the vehicle floor 11. The long straight tube portion 28 is fixed by the protector 26 in the vicinity thereof. Further, after the fixing, the remaining protector 26 and the second protector 36 are also fixed to predetermined positions on the vehicle attachment object 29. Thus, a series of operations related to the path routing of the wire harness 9 is completed. The longer wire harness 9 of the second embodiment is routed in a desired path as shown in Fig. 6.

### <Effects of Exterior Member 24 and Wire Harness 9>

As described above with reference to Figs. 6 to 9, in the exterior member 24 and the wire harness 9 according to the second embodiment of the present invention, the component management can be facilitated and the cost can be reduced as in the first embodiment. In addition, according to the exterior member 24 and the wire harness 9, it is possible to provide the exterior member 24 and the wire harness 9 having a small number of components, even when the wire harness 9 has a longer length.

### [Description of Reference Numerals and Signs]

- 1: hybrid automobile
- 2: engine
- 3: motor unit
- 4: inverter unit
- 5: battery
- 6: engine compartment
- 7: automobile rear portion
- 8, 9: wire harness
- 10: intermediate portion
- 11: vehicle floor
- 12: junction block
- 13: harness terminal
- 14: shield connector
- 15: wire harness
- 16: low voltage battery
- 17: automobile front portion
- 18: auxiliary device
- 19: harness main body
- 20: connector
- 21: harness main body
- 22: conductive path
- 23: shield member
- 24: exterior member
- 25: first exterior member
- 26: protector
- 27: flexible tube portion
- 28: straight tube portion
- 29: vehicle attachment object
- 30: bellows concave portion
- 31: bellows convex portion
- 32: protector main body
- 33: fixing portion
- 34: insertion hole
- 35: second exterior member
- 36: second protector
- 37: flexible tube portion
- 38, 39: terminal flexible tube portion
- 40: protector main body
- 41: fixing portion
- 42: insertion hole

## Claims

1. A wire harness (9) routed in an automobile and comprising an exterior member for accommodating and protecting one or a plurality of conductive paths (22),
wherein the exterior member (24) comprises:
a first exterior member (25); and
a protector (26) configured to regulate a desired path,
wherein the first exterior member (25) includes a bendable, flexible tube portion (27) and
a straight, non-flexible tube portion (28),
wherein the bendable, flexible tube portion (27) is a portion which is made of a resin and
through which one or a plurality of conductive paths (22) are inserted, and has a flexibility that allows the one or plurality of conductive paths (22) to be bendable and routed,
wherein the one or plurality of conductive paths (22) are routed straight in the straight,
non-flexible tube portion (28),
wherein the bendable, flexible tube portion (27) and the straight, non-flexible tube portion (28) are alternately and continuously arranged in a tube axis direction,
wherein the protector (26) is configured to maintain the flexible tube portion (27) in a desired bendable shape by mounting the protector (26) to the flexible tube portion (27),
wherein the protector (26) has a protector main body (32) in which the bendable, flexible tube portion (27) is directly surrounded from the outside, and
**characterised in that** the protector main body (32) is formed in a length so as to expose an end portion of the bendable, flexible tube portion (27) in order to allow some bending.

2. The wire harness (9) according to claim 1,
wherein a first terminal flexible tube portion (39) is arranged at a terminal of the first exterior member (25),
wherein a second protector (36) for connection is attached to the first terminal flexible tube portion (39), and
wherein a second terminal flexible tube portion (38) of a second exterior member (35) is connected to the second protector (36).

## Patentansprüche

1. Kabelbaum (9), der in einem Kraftfahrzeug verlegt ist und ein äußeres Element zum Aufnehmen und Schützen eines oder mehrerer leitenden/leitender Weges/Wege (22) umfasst, wobei das äußere Element (24) umfasst:
ein erstes äußeres Element (25) und
eine Schutzvorrichtung (26), die so ausgeführt ist, dass sie einen gewünschten Weg reguliert,
wobei das erste äußere Element (25) einen biegbaren, flexiblen Röhrenabschnitt (27) sowie einen geraden, nicht flexiblen Röhrenabschnitt (28) enthält,
der biegbare, flexible Röhrenabschnitt (27) ein Abschnitt ist, der aus einem Kunststoff besteht und über den ein oder mehrere leitender/leitende Weg/e (22) eingeführt wird/werden, und der eine Flexibilität aufweist, die zulässt, dass der eine oder die mehreren leitende/n Weg/e (22) gebogen werden kann/können und verlegt wird/werden,
wobei der eine oder die mehreren leitende/n Weg/e (22) gerade in dem geraden, nicht flexiblen Röhrenabschnitt (28) verlegt ist/sind,
der biegbare, flexible Röhrenabschnitt (27) und der gerade, nicht flexible Röhrenabschnitt (28) abwechselnd und kontinuierlich in einer Röhrenachsen-Richtung angeordnet sind,
die Schutzvorrichtung (26) so ausgeführt ist, dass sie den flexiblen Röhrenabschnitt (27) in einer gewünschten biegbaren Form hält, indem die Schutzvorrichtung (26) an dem flexiblen Röhrenabschnitt (27) angebracht wird,
die Schutzvorrichtung (26) einen Schutzvorrichtungs-Hauptkörper (32) aufweist, in dem der biegbare, flexible Röhrenabschnitt (27) direkt von außen umgeben ist, und
**dadurch gekennzeichnet, dass** der Schutzvorrichtungs-Hauptkörper (32) in einer solchen Länge ausgebildet ist, dass ein Endabschnitt des biegbaren, flexiblen Röhrenabschnitts (27) freiliegt, um gewisses Biegen zuzulassen.

2. Kabelbaum (9) nach Anspruch 1,
wobei ein erster flexibler Röhren-Endabschnitt (39) an einem Ende des ersten äußeren Elementes (25) angeordnet ist,
eine für Verbindung bestimmte zweite Schutzvorrichtung (36) an dem ersten Röhren-Endabschnitt (39) angebracht ist, und
ein zweiter flexibler Röhren-Endabschnitt (38) eines zweiten äußeren Elementes (35) mit der zweiten Schutzvorrichtung (36) verbunden ist.

## Revendications

1. Faisceau de câbles (9) routé dans une automobile et comprenant un élément extérieur destiné à accueillir et à protéger une ou une pluralité de lignes conductrices (22),
dans lequel l'élément extérieur (24) comprend :
un premier élément extérieur (25), et
un dispositif de protection (26) configuré pour assujettir une ligne souhaitée,
dans lequel le premier élément extérieur (25) inclut une partie de tube souple pliable (27) et une partie de tube rigide droite (28),
dans lequel la partie de tube souple pliable (27) est une partie qui est constituée d'une résine et au travers de laquelle sont insérées une ou une pluralité de lignes conductrices (22), et qui possède une souplesse qui permet le pliage et l'acheminement de la ligne ou de la pluralité de lignes conductrices (22),
dans lequel la ligne ou la pluralité de lignes conductrices (22) sont acheminées tout droit dans la partie de tube rigide droite (28),
dans lequel la partie de tube souple pliable (27) et la partie de tube rigide droite (28) sont disposées alternativement et de manière continue dans une direction d'axe de tube,
dans lequel le dispositif de protection (26) est configuré pour maintenir la partie de tube souple (27) dans une forme pliable souhaitée en montant le dispositif de protection (26) sur la partie de tube souple (27),
dans lequel le dispositif de protection (26) possède un corps principal de protection (32) dans lequel la partie de tube souple pliable (27) est directement entourée depuis le milieu extérieur, et
**caractérisé en ce que** :
le corps principal de protection (32) est formé pour présenter une longueur permettant d'exposer une extrémité de la partie de tube souple pliable (27) afin d'autoriser un certain pliage.

2. Faisceau de câbles (9) selon la revendication 1,
dans lequel une première partie de tube souple de borne (39) est disposée au niveau d'une borne du premier élément extérieur (25),
dans lequel un second dispositif de protection (36), destiné à une connexion, est fixé à la première partie de tube souple de borne (39), et
dans lequel une seconde partie de tube souple de borne (38) d'un second élément extérieur (35) est connectée au second dispositif de protection (36).
